# EUROPEAN PATENT APPLICATION

(11) **EP 3 276 974 A1**
(43) Date of publication of application: **31.01.2018**
(21) Application number: 17182626.6
(22) Date of filing: 21.07.2017
(51) Int. Cl.: H04N 21/4363, H04N 21/436, H04N 21/2187, H04N 21/472

(54) **VIDEO SHARING METHOD AND APPARATUS, COMPUTER PROGRAM AND RECORDING MEDIUM**

(30) Priority: 29.07.2016 CN 201610616299
(71) Applicant: Beijing Xiaomi Mobile Software Co., Ltd., Beijing 100085 (CN)
(72) Inventor: LI, Zhigang, Haidian District, Beijing 100085 (CN); HE, Gaozhen, Haidian District, Beijing 100085 (CN)
(74) Representative: Kudlek, Franz Thomas

(57) **Abstract**

The present invention relates to a video sharing method and apparatus, a computer program and a recording medium, which pertain to the field of terminal technology. The method comprises: acquiring an identification of a currently played video, when a sharing instruction is received with respect to the video, the video being played by a video client; establishing a connection with a first user terminal through a NFC module utilizing a short range wireless communication technology, the first user terminal being within a radio frequency identifiable range of the NFC module and having turned on its own NFC module; and sharing the video with the first user terminal through the NFC module based on the identification of the video. The present invention enables a user terminal to share a video through a built-in NFC module. Thus, video sharing can be done without installing an additional application, thereby eliminating the dependence on a social application and improving the flexibility of video sharing. Moreover, video sharing based on the identification of the video enables the user terminal which accepts the sharing to open the video based on the identification of the video in a video client, thereby improving the playing effect of the shared video.

## Description

### TECHNICAL FIELD

The present invention is related to the field of terminal technology, and more particularly to a video sharing method and apparatus, a computer program and a recording medium.

### BACKGROUND

With the development of terminal technology, users can watch various videos using their terminals. When a user watches interesting videos, he or she often wants to share such interesting videos with other users directly via his or her terminal. For example, when he or she watches an interesting livecast video in a livecast room on a livecast client, a user will intend to share the livecast video with other users via his or her terminal.

Currently, it is a commonly-used manner to share a video by means of a social application in a terminal. For example, when a user watches an interesting livecast video, he or she may click a sharing button in a currently displayed interface to trigger a sharing instruction. When receiving the sharing instruction, the terminal can acquire a video link address of the livecast video and send the video link address to another user via a social application. After the other user receives the video link address, he or she may open a corresponding webpage by clicking the video link address, thereby watching the livecast video in the webpage.

### SUMMARY

To overcome problems in the related art, the prevent invention provides a video sharing method and apparatus, a computer program and a recording medium as below.

According to a first aspect of the present invention, there is provided a video sharing method, comprising: acquiring an identification of a currently played video, when a sharing instruction is received with respect to the video, the video being played by a video client; establishing a connection with a first user terminal through a NFC module utilizing a short range wireless communication technology, the first user terminal being within a radio frequency identifiable range of the NFC module and having turned on its own NFC module; and sharing the video with the first user terminal through the NFC module based on the identification of the video.

Advantageously, before establishing the connection with the first user terminal through the NFC module utilizing the short range wireless communication technology, the method further comprises: determining whether the NFC module has been turned on; and turning on the NFC module if the NFC module has not been turned on. Accordingly, after sharing the video with the first user terminal, the method further comprises turning off the NFC module.

Advantageously, the video client is a livecast client, the video is a livecast video in a livecast room, and the identification of the video is an identification of the livecast room.

Advantageously, when the video is a livecast video in a livecast room, the method further comprises: acquiring an identification of an anchor of the livecast room, before sharing the video with the first user terminal through the NFC module based on the identification of the video. Accordingly, sharing the video with the first user terminal through the NFC module based on the identification of the video comprises: sharing the video with the first user terminal through the NFC module based on the identification of the video and the identification of the anchor of the livecast room.

According to a second aspect of the present invention, there is provided a video sharing method, comprising: establishing a connection with a second user terminal through a NFC module, the second user terminal being within a radio frequency identifiable range of the NFC module and having turned on its own NFC module; and receiving a video shared by the second user terminal through the NFC module based on the identification of the video, the identification of the video being acquired by the second user terminal when it receives a sharing instruction with respect to the video currently played, the video being played by the second user terminal through a video client.

Advantageously, after receiving the video shared by the second user terminal through the NFC module based on the identification of the video, the method further comprises: generating, in the video client, an entry for accessing the video, based on the identification of the video; and displaying the entry in a display interface of the video client.

Advantageously, displaying the entry in the display interface of the video client comprises: displaying a prompt box in the display interface of the video client, the prompt box including a confirm option and a cancel option, the confirm option being the entry for accessing the video, the cancel option being provided for cancelling display of the prompt box.

Advantageously, after displaying the entry in the display interface of the video client, the method further comprises: playing the video in the video client, when receiving a playing instruction with respect to the entry.

According to a third aspect of the present invention, there is provided a video sharing apparatus, comprising: a first acquiring module configured to acquire an identification of a currently played video, when a sharing instruction is received with respect to the video, the video being played by a video client; a connecting module configured to establish a connection with a first user terminal through a NFC module utilizing a short range wireless communication technology, the first user terminal being within a radio frequency identifiable range of the NFC module and having turned on its own NFC module; and a sharing module configured to share the video with the first user terminal through the NFC module based on the identification of the video.

Advantageously, the apparatus further comprises: a determining module configured to determine whether the NFC module has been turned on; a turning-on module configured to turn on the NFC module if the NFC module has not been turned on; and a turning-off module configured to turn off the NFC module.

Advantageously, the video client is a livecast client, the video is a livecast video in a livecast room, and the identification of the video is an identification of the livecast room.

Advantageously, when the video is a livecast video in a livecast room, the apparatus further comprises: a second acquiring module configured to acquire an identification of an anchor of the livecast room. The sharing module is configured to share the video with the first user terminal through the NFC module based on the identification of the video and the identification of the anchor of the livecast room.

According to a fourth aspect of the present invention, there is provided a video sharing apparatus, comprising: a connecting module configured to establish a connection with a second user terminal through a NFC module, the second user terminal being within a radio frequency identifiable range of the NFC module and having turned on its own NFC module; and a receiving module configured to receive a video shared by the second user terminal through the NFC module based on the identification of the video, the identification of the video being acquired by the second user terminal when it receives a sharing instruction with respect to the video currently played, the video being played by the second user terminal through a video client.

Advantageously, the apparatus further comprises: a generating module configured to generate, in the video client, an entry for accessing the video, based on the identification of the video; and a displaying module configured to display the entry in a display interface of the video client.

Advantageously, the displaying module is configured to: display a prompt box in the display interface of the video client, the prompt box including a confirm option and a cancel option, the confirm option being the entry for accessing the video, the cancel option being provided for cancelling display of the prompt box.

Advantageously, the apparatus further comprises: a playing module configured to play the video in the video client, when a playing instruction is received with respect to the entry.

According to a fifth aspect of the present invention, there is provided a video sharing apparatus, comprising: a processor; and a memory storing instructions executable by the processor. The processor is configured to: acquire an identification of a currently played video, when a sharing instruction is received with respect to the video, the video being played by a video client; establish a connection with a first user terminal through a NFC module utilizing a short range wireless communication technology, the first user terminal being within a radio frequency identifiable range of the NFC module and having turned on its own NFC module; and share the video with the first user terminal through the NFC module based on the identification of the video.

According to a sixth aspect of the present invention, there is provided a video sharing apparatus, comprising: a processor; and a memory storing instructions executable by the processor. The processor is configured to: establish a connection with a second user terminal through a NFC module, the second user terminal being within a radio frequency identifiable range of the NFC module and having turned on its own NFC module; and receive a video shared by the second user terminal through the NFC module based on the identification of the video, the identification of the video being acquired by the second user terminal when it receives a sharing instruction with respect to the video currently played, the video being played by the second user terminal through a video client.

In one particular embodiment, the steps of the video sharing method are determined by computer program instructions.

Consequently, according to a seventh aspect, the invention is also directed to a computer program for executing the steps of the video sharing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of this invention may have the following advantageous effects. In the embodiments of the invention, when receiving a sharing instruction with respect to a currently played video, a second user terminal may acquire an identification of the video and establish a connection with a first user terminal through a NFC module, and then share the video with the first user terminal through the NFC module based on the identification of the video. The video is played by a video client, and the first user terminal is within a radio frequency identifiable range of the NFC module and has turned on its own NFC module. Thus, the present invention achieves the effect that the second user terminal can share a video directly through the NFC module when receiving a sharing instruction with respect to the video. Because a terminal is normally equipped with a NFC module, video sharing can be done without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart of a video sharing method according to an exemplary embodiment;
Fig. 2 is a flowchart of another video sharing method according to an exemplary embodiment;
Fig. 3 is a flowchart of yet another video sharing method according to an exemplary embodiment;
Fig. 4A is a block diagram of a video sharing apparatus according to an exemplary embodiment;
Fig. 4B is a block diagram of another video sharing apparatus according to an exemplary embodiment;
Fig. 4C is a block diagram of yet another video sharing apparatus according to an exemplary embodiment;
Fig. 5A is a block diagram of a video sharing apparatus according to an exemplary embodiment;
Fig. 5B is a block diagram of another video sharing apparatus according to an exemplary embodiment;
Fig. 5C is a block diagram of yet another video sharing apparatus according to an exemplary embodiment;
Fig. 6 is a block diagram of a video sharing apparatus 600 according to an exemplary embodiment;
Fig. 7 is a block diagram of a video sharing apparatus 700 according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

Before describing embodiments of the invention in detail, a scenario for applying the embodiments of the invention will be described.

In related art, video sharing by means of a social application depends too much on the social application. Therefore, when a user's terminal is not installed with a social application, the user cannot share a video, which is rather inflexible. Moreover, when video sharing is performed via a social application, a video can be shared only in the form of a video link address and the user who accepts the sharing can watch the video only in a webpage but not in a video client. In view of these, the present invention provides another video sharing method to address problems in the related art. The method is used in a terminal, such as a computer, a smart phone, a tablet, a laptop, an Ultra-mobile Personal Computer (UMPC), a netbook or a Personal Digital Assistant (PDA), which is not limited by the invention.

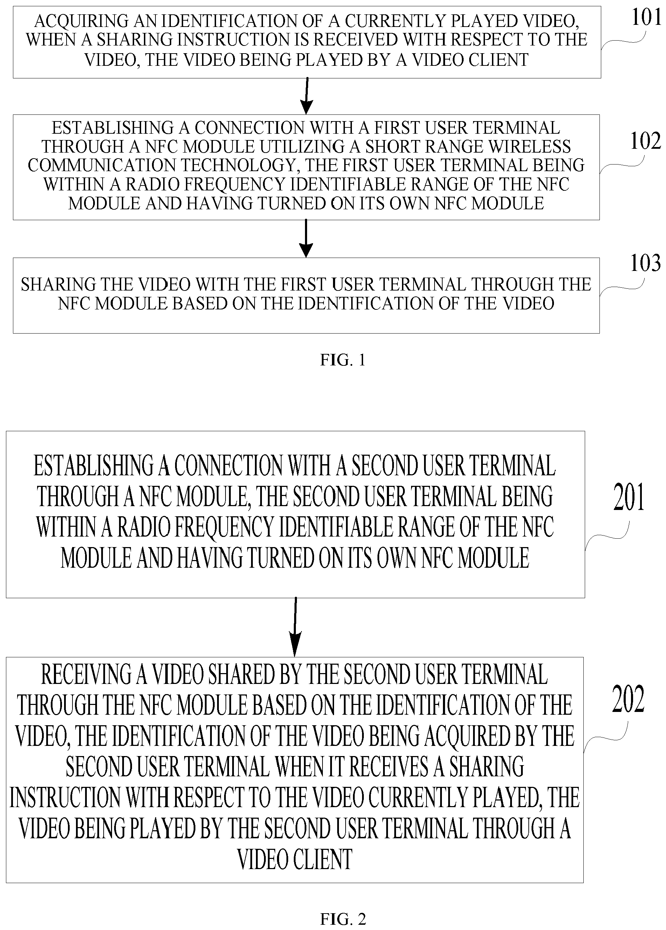

Fig. 1 is a flowchart of a video sharing method according to an exemplary embodiment. As shown, the method is used in a terminal and comprises the following steps.

In step 101, an identification of a currently played video is acquired, when a sharing instruction is received with respect to the video. The video is played by a video client.

In step 102, a connection is established with a first user terminal through a NFC module utilizing a short range wireless communication technology. The first user terminal is within a radio frequency identifiable range of the NFC module and has turned on its own NFC module.

In step 103, the video is shared with the first user terminal through the NFC module based on the identification of the video.

In the embodiment of the invention, when receiving a sharing instruction with respect to a currently played video, a second user terminal may acquire an identification of the video and establish a connection with a first user terminal through a NFC module, and then share the video with the first user terminal through the NFC module based on the identification of the video. The video is played by a video client, and the first user terminal is within a radio frequency identifiable range of the NFC module and has turned on its own NFC module. Thus, the present invention achieves the effect that the second user terminal can share a video directly through the NFC module when receiving a sharing instruction with respect to the video. Because a terminal is normally equipped with a NFC module, video sharing can be done without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

Optionally, before establishing the connection with the first user terminal through the NFC module utilizing the short range wireless communication technology, the method further comprises: determining whether the NFC module has been turned on; and turning on the NFC module if the NFC module has not been turned on. Accordingly, after sharing the video with the first user terminal, the method further comprises turning off the NFC module.

Optionally, the video client is a livecast client, the video is a livecast video in a livecast room, and the identification of the video is an identification of the livecast room.

Optionally, when the video is a livecast video in a livecast room, the method further comprises: acquiring an identification of an anchor of the livecast room, before sharing the video with the first user terminal through the NFC module based on the identification of the video. Accordingly, sharing the video with the first user terminal through the NFC module based on the identification of the video comprises: sharing the video with the first user terminal through the NFC module based on the identification of the video and the identification of the anchor of the livecast room.

All the above optional solutions may be combined arbitrarily to form optional embodiments of the invention, which will not be described in detail one by one herein.

Fig. 2 is a flowchart of a video sharing method according to an exemplary embodiment. As shown, the method is used in a terminal and comprises the following steps.

In step 201, a connection is established with a second user terminal through a NFC module. The second user terminal is within a radio frequency identifiable range of the NFC module and has turned on its own NFC module.

In step 202, a video shared by the second user terminal through the NFC module based on the identification of the video is received. The identification of the video is acquired by the second user terminal when it receives a sharing instruction with respect to the video currently played, and the video is played by the second user terminal through a video client.

In the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played, and the video is played by the second user terminal through a video client. Thus, the present invention achieves the effect that the second user terminal can share a video directly through the NFC module when receiving a sharing instruction with respect to the video. Because a terminal is normally equipped with a NFC module, the second user terminal can perform video sharing without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

Optionally, after receiving the video shared by the second user terminal through the NFC module based on the identification of the video, the method further comprises: generating, in the video client, an entry for accessing the video, based on the identification of the video; and displaying the entry in a display interface of the video client.

Optionally, displaying the entry in the display interface of the video client comprises: displaying a prompt box in the display interface of the video client. The prompt box includes a confirm option and a cancel option. The confirm option is the entry for accesssing the video, and the cancel option is provided for cancelling display of the prompt box.

Optionally, after displaying the entry in the display interface of the video client, the method further comprises: playing the video in the video client, when receiving a playing instruction with respect to the entry.

All the above optional solutions may be combined arbitrarily to form optional embodiments of the invention, which will not be described in detail one by one herein.

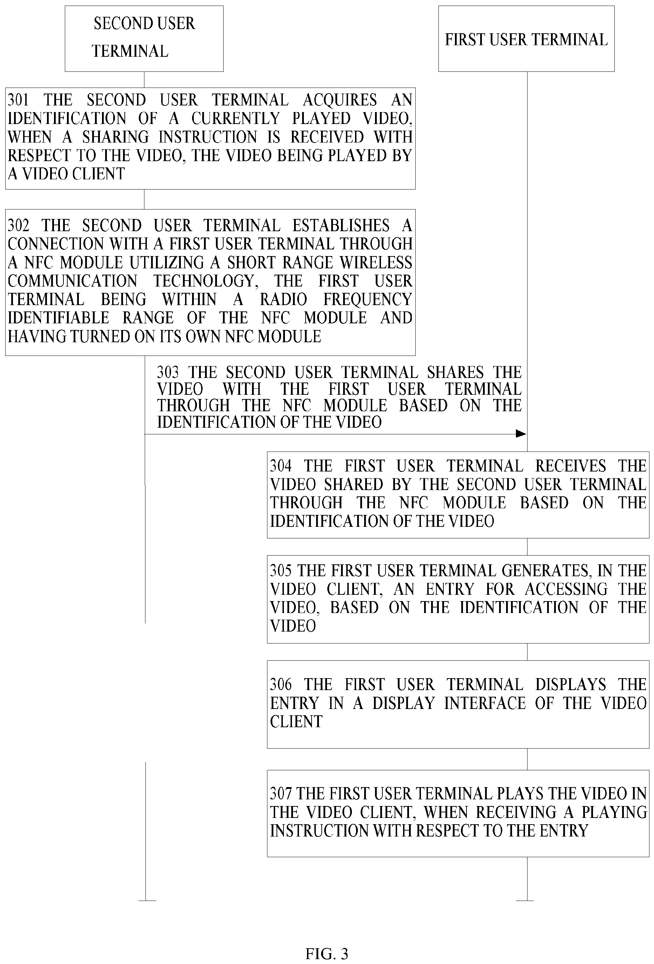

Fig. 3 is a flowchart of a video sharing method according to an exemplary embodiment. The method is used in a terminal interaction system, which comprises a first user terminal and a second user terminal. As shown in Fig. 3, the method comprises the following steps.

In step 301, when the second user terminal receives a sharing instruction with respect to a currently played video, it acquires an identification of the video. The video is played by a video client.

The sharing instruction instructs to share the currently played video. In practical application, the sharing instruction may be triggered by a user by performing a designated operation. The designated operation may be a click operation, a slide operation, a voice operation or the like, which is not limited by the embodiment of the invention.

For example, there may be a sharing button in an interface for playing the video. When a user considers a currently played video interesting and wants to share it with another user, he or she may click the sharing button to directly trigger the sharing instruction. Alternatively, after the user clicks the sharing button, several sharing options may pop up in the playing interface. The sharing options may include a NFC sharing option, a social application sharing option and the like. The NFC sharing option is provided for performing video sharing via a NFC module. The social application sharing option is provided for performing video sharing via a social application. The user may trigger the sharing instruction by clicking the NFC sharing option among the several sharing options.

The identification of the video is used for uniquely identifying the video in the video client, and may be a name, an ID (identity) or the like of the video, which is not limited by the embodiment of the invention.

It is to be noted that the video client may be a livecast client. When the video client is a livecast client, the video is a livecast video in a livecast room and the identification of the video is an identification of the livecast room. The identification of the livecast room is used for uniquely identifying the livecast room in which the video is livecast, and may be a name, a room number or the like of the livecast room, which is not limited by the embodiment of the invention.

Further, when the video client is a livecast client, the second user terminal may acquire an identification of an anchor of the livecast room or the like. The identification of the anchor is used for uniquely identifying the anchor, and may be a name, ID or the like of the anchor, which is not limited in the embodiment of the invention.

In step 302, the second user terminal establishes a connection with the first user terminal through a NFC module utilizing a short range wireless communication technology. The first user terminal is within a radio frequency identifiable range of the NFC module and has turned on its own NFC module.

After receiving the sharing instruction, the second user terminal may directly invoke an interface of the NFC module and emit a radio frequency field to its surrounding space through the NFC module, in order to identify other user terminals within the range of the radio frequency field which have turned on their NFC modules. When the first user terminal is within the radio frequency identifiable range of the NFC module of the second user terminal and has also turned on its NFC module, it can also emit a radio frequency field to its surrounding space, so that the second user terminal can identify the first user terminal according to the radio frequency field and automatically establish a connection with the first user terminal.

In practical application, a related NFC protocol may be integrated in the video client, so that when the second user terminal receives a sharing instruction with respect to a video played by the video client, it can invoke the interface of the NFC module according to the NFC protocol and thus establish a connection with the first user terminal through the NFC module.

In step 303, the second user terminal shares the video with the first user terminal through the NFC module based on the identification of the video.

Sharing the video with the first user terminal based on the identification of the video may comprise: sending the identification of the video to the first user terminal to share the video with the first user terminal.

Further, when the video is a livecast video in a livecast room, the method may further comprise: acquiring an identification of an anchor of the livecast room, before sharing the video with the first user terminal through the NFC module based on the identification of the video. Accordingly, sharing the video with the first user terminal through the NFC module based on the identification of the video may comprise: sharing the video with the first user terminal through the NFC module based on the identification of the video and the identification of the anchor of the livecast room.

Sharing the video with the first user terminal through the NFC module based on the identification of the video and the identification of the anchor of the livecast room may comprise: sending the identification of the video and the identification of the anchor of the livecast room to the first user terminal to share the video with the first user terminal.

In addition, because the identification of the video may be an identification of a livecast room of the video when the video is a livecast video in the livecast room, sending the identification of the video and the identification of the anchor of the livecast room to the first user terminal may be sending the identification of the livecast room of the video and the identification of the anchor of the livecast room to the first user terminal.

Further, before establishing the connection with the first user terminal through the NFC module utilizing the short range wireless communication technology, the method further comprises: determining whether the NFC module has been turned on; and turning on the NFC module if the NFC module has not been turned on. Accordingly, after sharing the video with the first user terminal, the method further comprises turning off the NFC module.

That is, in the embodiment of the invention, after the second user terminal receives a sharing instruction with respect to the video, it may directly establish a connection with the first user terminal through the NFC module when determining that the NFC module has been turned on. When determining that the NFC module has not been turned on, the second user terminal may automatically turn on the NFC module, so as to establish a connection with the first user terminal through the NFC module after turning on the NFC module. In addition, after sharing the video with the first user terminal, the second terminal may turn off the NFC module. In this way, the NFC module is turned on only when video sharing is needed, thereby not only ensuring the success rate of video sharing through the NFC module but also saving power consumption of the terminal.

In step 304, the first user terminal receives the video shared by the second user terminal through the NFC module based on the identification of the video.

In step 305, the first user terminal generates, in the video client, an entry for accessing the video based on the identification of the video.

When the video is a video in a livecast room played by the second user terminal, the video client is a livecast client, and the entry for accessing the video is an entry in the livecast client to the livecast room of the video.

In order for the user with which the video is shared to watch the video in the video client based on the identification of the video, the first user terminal may further generate, in the client, an entry for accessing the video based on the identification of the video, after receiving the identification of the video.

Because the identification of the video is used for uniquely identifying the video in the video client, after receiving the identification of the video, the first user terminal can find the video in the video client and accordingly generate an entry for accessing the video directly based on the identification of the video. Reference can be made to the related art for the specific method for generating the entry, which method is not limited by the embodiment of the invention.

In step 306, the first user terminal displays the entry in a display interface of the video client.

The entry may be displayed in the form of an icon, a button, an option, text information, a prompt box or any combination thereof, which is not limited by the embodiment of the invention.

Further, the entry may also display identification information of the video for indicating the shared video. Of course, identification information of the second user terminal may also be displayed for indicating the terminal which shares the video with the first user terminal, and the embodiment of the invention is not limited in this regard. The identification of the second user terminal may be a device identification of the second user terminal (such as a model number of the second user terminal) or a user account logged into by the second user terminal (such as a user account logged into on the video client). Of course, the identification may also be a user account logged into on another application, and the embodiment of the invention is not limited in this regard.

Further, when the video is a livecast video in a livecast room, the entry may further comprise identification information of an anchor of the livecast room for indicating the shared anchor, and the embodiment of the invention is not limited in this regard.

For example, the second user terminal may display a prompt box in a display interface of the video client. The prompt box may include prompt information and an icon. The prompt information may include identification information of the second user terminal and identification information of the video, prompting that the second user terminal has shared the video. The icon is an entry for accessing the video. For example, when the identification of the second user terminal is a user account "Tianya" logged into by the second user terminal on the livecast client, the identification of the video is a room number "123" of the livecast room of the video and the anchor of the livecast room has an ID of "Xuewu", the prompt information may be "Your friend 'Tianya' shares a livecast video of an anchor 'Xuewu' with you. The room number of the livecast room is 123. You can enter the livecast room to watch the livecast video by clicking the icon in the prompt box." The icon is the entry to the livecast room "123".

Further, displaying the entry in the display interface of the video client may comprise: displaying a prompt box in the display interface of the video client, wherein the prompt box includes a confirm option and a cancel option, the confirm option is the entry for accessing the video, and the cancel option is provided for cancelling display of the prompt box.

The prompt box may also comprise the above-described prompt information. For example, referring to the above example, the prompt information in the prompt box may be "Your friend 'Tianya' shares a livecast video of an anchor 'Xuewu' with you. The room number of the livecast room is 123. Do you want to enter the livecast room?" When clicking the confirm option in the prompt box, the user can enter the livecast room to watch the livecast video of the anchor "Xuewu". When the user clicks the cancel option in the prompt box, display of the prompt box can be cancelled in the current display interface.

It is to be noted that, when the first user terminal starts the video client in foreground, it can generate the entry in the foreground video client when receiving the video shared based on the identification of the video, and directly display the entry in the current display interface of the video client. When the first user terminal starts the video client in background, it can generate the entry in the background video client when receiving the video shared based on the identification of the video, and then display the entry in the display interface of the video client when the video client is started in foreground.

In step 307, when the first user terminal receives a playing instruction with respect to the entry, it plays the video in the video client.

The playing instruction may be triggered by a user by performing a designated operation. For example, the user may trigger the playing instruction by clicking the entry.

If the video client is a livecast client and the entry for accessing the video is an entry to a livecast room, then the first user terminal can enter the livecast room and play the video in the livecast room by using the livecast client when receiving the playing instruction with respect to the entry.

In the embodiment of the invention, when receiving a video shared by the second user terminal based on an identification of the video, the first user terminal may open the shared video in a video client, so that the user can watch the shared video in the video client instead of just in a webpage. As such, user experience is improved, because a better playing effect can be achieved in the video client.

In summary, in the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played. The video is played by the second user terminal through a video client. Thus, the present invention achieves the effect that the second user terminal can share a video with the first user terminal directly through the NFC module when receiving a sharing instruction with respect to the video. Because a terminal is normally equipped with a NFC module, video sharing can be done without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

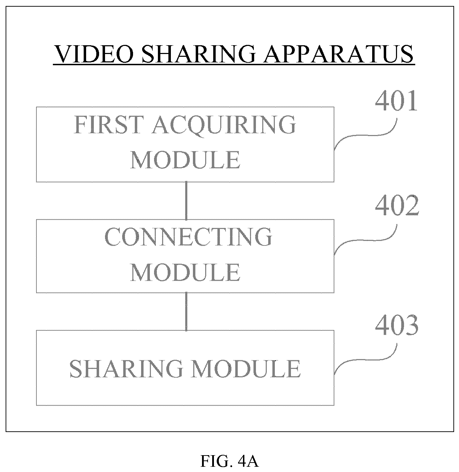

Fig. 4A is a block diagram of a video sharing apparatus according to an exemplary embodiment. As shown in Fig. 4A, the apparatus comprises a first acquiring module 401, a connecting module 402 and a sharing module 403.

The first acquiring module 401 is configured to acquire an identification of a currently played video, when a sharing instruction is received with respect to the video, the video being played by a video client.

The connecting module 402 is configured to establish a connection with a first user terminal through a NFC module utilizing a short range wireless communication technology, the first user terminal being within a radio frequency identifiable range of the NFC module and having turned on its own NFC module.

The sharing module 403 is configured to share the video with the first user terminal through the NFC module based on the identification of the video.

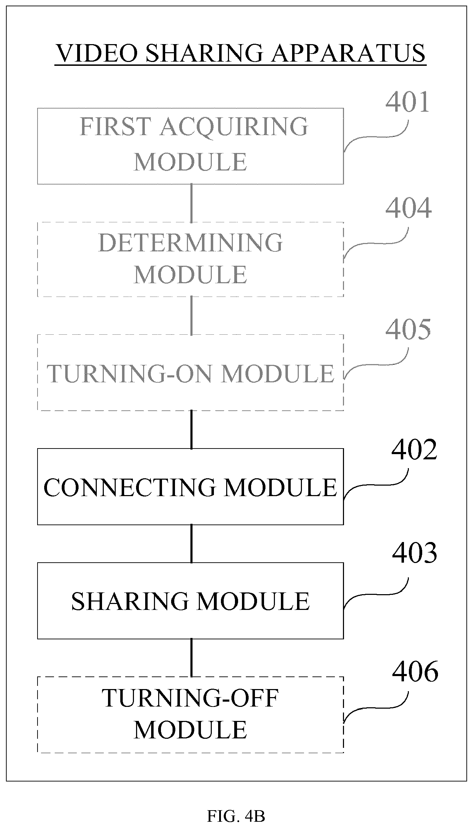

Optionally, as shown in Fig. 4B, the apparatus further comprises: a determining module 404 configured to determine whether the NFC module has been turned on; a turning-on module 405 configured to turn on the NFC module if the NFC module has not been turned on; and a turning-off module 406 configured to turn off the NFC module.

Optionally, the video client is a livecast client, the video is a livecast video in a livecast room, and the identification of the video is an identification of the livecast room.

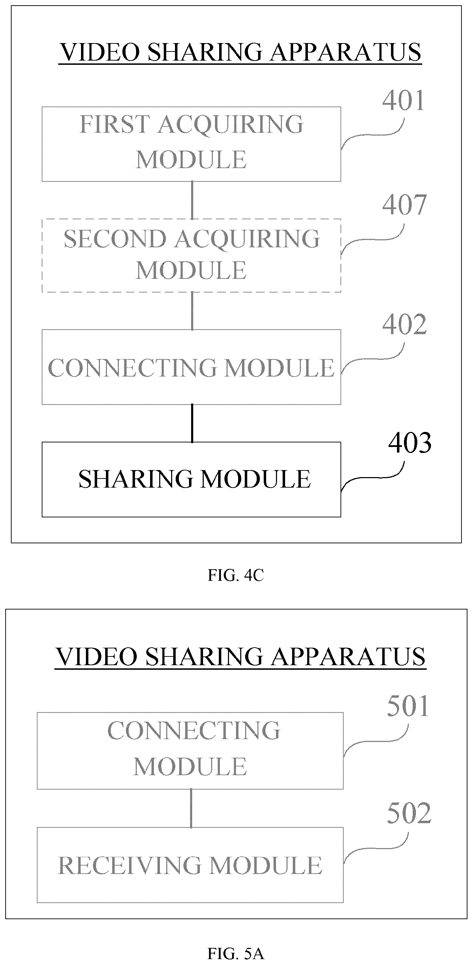

Optionally, as shown in Fig. 4C, when the video is a livecast video in a livecast room, the apparatus further comprises: a second acquiring module 407 configured to acquire an identification of an anchor of the livecast room. Accordingly, the sharing module 403 is configured to share the video with the first user terminal through the NFC module based on the identification of the video and the identification of the anchor of the livecast room.

In the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played, and the video is played by the second user terminal through a video client. Thus, the present invention achieves the effect that the second user terminal can share a video directly through the NFC module when receiving a sharing instruction with respect to the video. Because a terminal is normally equipped with a NFC module, the second user terminal can perform video sharing without installing an additional application such as a social application, thereby eliminating the dependence on a social application and improving the ease and flexibility of video sharing. Moreover, video sharing based on the identification of the video enables the first user terminal to open the video based on the identification of the video in a video client instead of in a webpage, thereby improving the playing effect of the shared video.

With respect to the apparatus in the above embodiment, the specific manners for individual modules in the apparatus to perform operations have been described in detail in the embodiments regarding the related methods, and will not be elaborated herein.

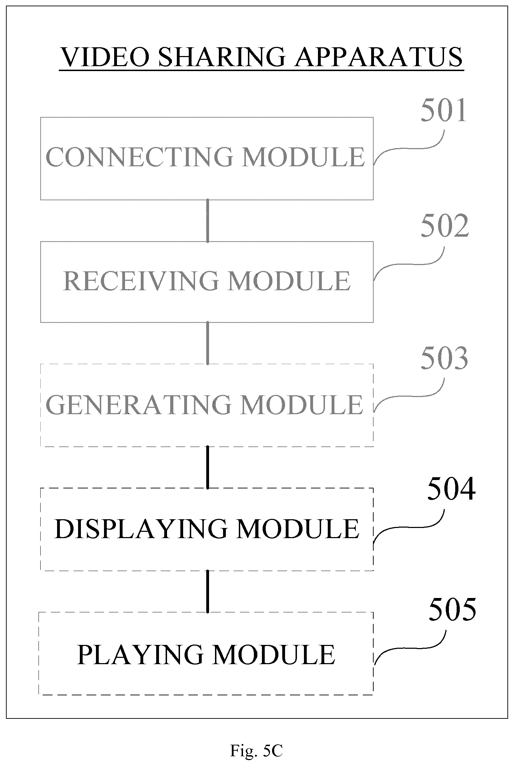

Fig. 5A is a block diagram of a video sharing apparatus according to an exemplary embodiment. As shown in Fig. 5A, the apparatus comprises a connecting module 501 and a receiving module 502.

The connecting module 501 is configured to establish a connection with a second user terminal through a NFC module, the second user terminal being within a radio frequency identifiable range of the NFC module and having turned on its own NFC module.

The receiving module 502 is configured to receive a video shared by the second user terminal through the NFC module based on the identification of the video, the identification of the video being acquired by the second user terminal when it receives a sharing instruction with respect to the video currently played, the video being played by the second user terminal through a video client.

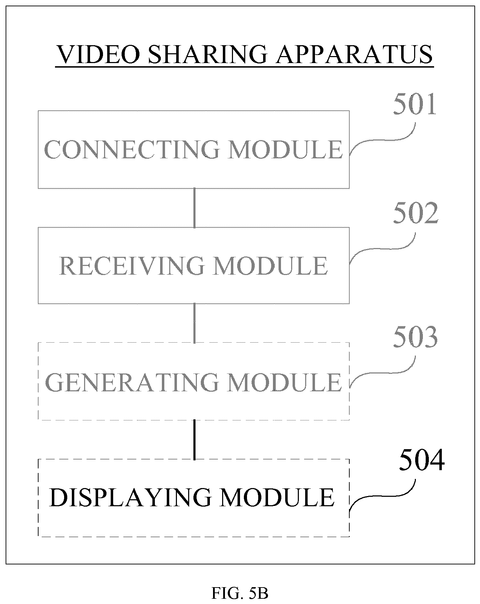

Optionally, as shown in Fig. 5B, the apparatus further comprises: a generating module 503 configured to generate, in the video client, an entry for accessing the video, based on the identification of the video; and a displaying module 504 configured to display the entry in a display interface of the video client.

Optionally, the displaying module 504 is configured to: display a prompt box in the display interface of the video client, the prompt box including a confirm option and a cancel option, the confirm option being the entry for accessing the video, the cancel option being provided for cancelling display of the prompt box.

In the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played, and the video is played by the second user terminal through a video client. Thus, the present invention achieves the effect that the second user terminal can share a video directly through the NFC module when receiving a sharing instruction with respect to the video. Because a terminal is normally equipped with a NFC module, the second user terminal can perform video sharing without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

With respect to the apparatus in the above embodiment, the specific manners for individual modules in the apparatus to perform operations have been described in detail in the embodiments regarding the related methods, and will not be elaborated herein.

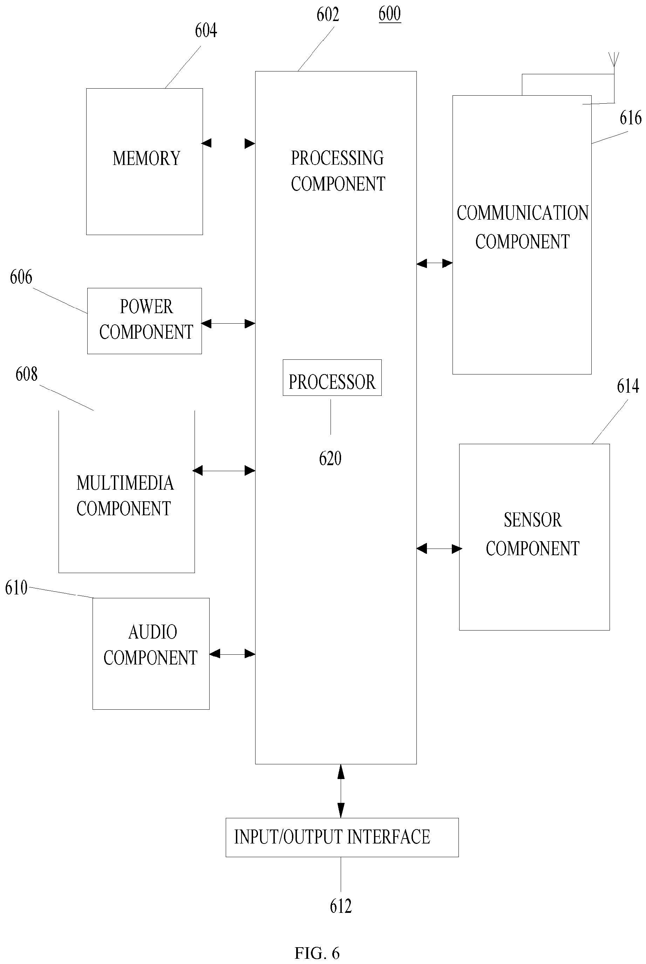

Fig. 6 is a block diagram of a video sharing apparatus 600 according to an exemplary embodiment of the present invention. For example, the apparatus 600 may be a mobile phone, a computer, a digital broadcast terminal, a messaging device, a gaming console, a tablet, a medical device, exercise equipment, a personal digital assistant or the like.

As shown in Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In one embodiment, the communication component 616 receives a broadcast signal or broadcast associated information from an external broadcast management system via a broadcast channel. In one embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an embodiment, there is also provided a non-transitory computer readable storage medium including instructions, such as included in the memory 604, executable by the processor 620 in the apparatus 600, for performing the above-described methods. For example, the non-transitory computer readable storage medium may be a ROM, a RAM, a CD-ROM, a magnetic tape, a floppy disc, an optical data storage device, and the like.

When executed by a processor of a mobile terminal, the instructions in the non-transitory computer readable storage medium cause the mobile terminal to perform a video sharing method. The method comprises: acquiring an identification of a currently played video, when a sharing instruction is received with respect to the video, the video being played by a video client; establishing a connection with a first user terminal through a NFC module utilizing a short range wireless communication technology, the first user terminal being within a radio frequency identifiable range of the NFC module and having turned on its own NFC module; and sharing the video with the first user terminal through the NFC module based on the identification of the video.

Optionally, before establishing the connection with the first user terminal through the NFC module utilizing the short range wireless communication technology, the method further comprises: determining whether the NFC module has been turned on; and turning on the NFC module if the NFC module has not been turned on. Accordingly, after sharing the video with the first user terminal, the method further comprises turning off the NFC module.

Optionally, the video client is a livecast client, the video is a livecast video in a livecast room, and the identification of the video is an identification of the livecast room.

Optionally, when the video is a livecast video in a livecast room, the method further comprises: acquiring an identification of an anchor of the livecast room, before sharing the video with the first user terminal through the NFC module based on the identification of the video. Accordingly, sharing the video with the first user terminal through the NFC module based on the identification of the video comprises: sharing the video with the first user terminal through the NFC module based on the identification of the video and the identification of the anchor of the livecast room.

In the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played, and the video is played by the second user terminal through a video client. Thus, the present invention achieves the effect that the second user terminal can share a video directly through the NFC module when receiving a sharing instruction with respect to the video. Because a terminal is normally equipped with a NFC module, the second user terminal can perform video sharing without installing an additional application such as a social application, thereby eliminating the dependence on a social application and improving the ease and flexibility of video sharing. Moreover, video sharing based on the identification of the video enables the first user terminal to open the video based on the identification of the video in a video client instead of in a webpage, thereby improving the playing effect of the shared video.

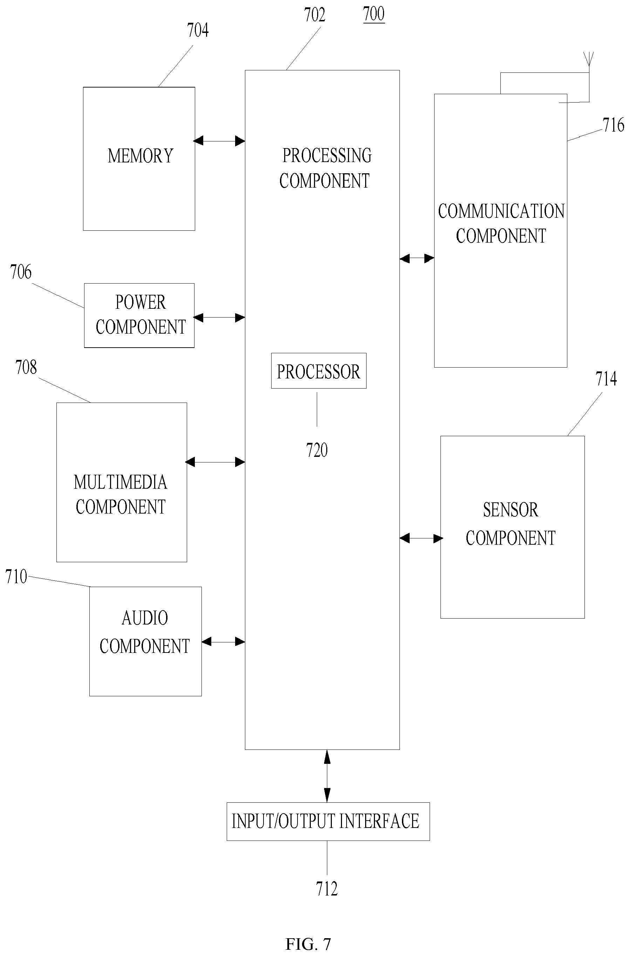

Fig. 7 is a block diagram of a video sharing apparatus 700 according to an exemplary embodiment of the present invention. For example, the apparatus 700 may be a mobile phone, a computer, a digital broadcast terminal, a messaging device, a gaming console, a tablet, a medical device, exercise equipment, a personal digital assistant or the like.

As shown in Fig. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the apparatus 700 and other devices. The apparatus 700 can access a wireless network based on a communication standard, such as WiFi, 2G, or 3G, or a combination thereof. In one embodiment, the communication component 716 receives a broadcast signal or broadcast associated information from an external broadcast management system via a broadcast channel. In one embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an embodiment, there is also provided a non-transitory computer readable storage medium including instructions, such as included in the memory 704, executable by the processor 720 in the apparatus 700, for performing the above-described methods. For example, the non-transitory computer readable storage medium may be a ROM, a RAM, a CD-ROM, a magnetic tape, a floppy disc, an optical data storage device, and the like.

When executed by a processor of a mobile terminal, the instructions in the non-transitory computer readable storage medium cause the mobile terminal to perform a video sharing method. The method comprises: establishing a connection with a second user terminal through a NFC module, the second user terminal being within a radio frequency identifiable range of the NFC module and having turned on its own NFC module; and receiving a video shared by the second user terminal through the NFC module based on the identification of the video, the identification of the video being acquired by the second user terminal when it receives a sharing instruction with respect to the video currently played, the video being played by the second user terminal through a video client.

Optionally, after receiving the video shared by the second user terminal through the NFC module based on the identification of the video, the method further comprises: generating, in the video client, an entry for accessing the video, based on the identification of the video; and displaying the entry in a display interface of the video client.

Optionally, displaying the entry in the display interface of the video client comprises: displaying a prompt box in the display interface of the video client, the prompt box including a confirm option and a cancel option, the confirm option being the entry for accessing the video, the cancel option being provided for cancelling display of the prompt box.

Optionally, after displaying the entry in the display interface of the video client, the method further comprises: playing the video in the video client, when receiving a playing instruction with respect to the entry.

In the embodiment of the invention, a first user terminal may establish a connection with a second user terminal through a NFC module, and receive a video shared by the second user terminal through the NFC module based on an identification of the video. The second user terminal is within a radio frequency identifiable range of the NFC module and has turned on its own NFC module. The identification of the video is acquired by the second user terminal when it receives a sharing instruction with respect to the video currently played, and the video is played by the second user terminal through a video client. Thus, the present invention achieves the effect that the second user terminal can share a video directly through the NFC module when receiving a sharing instruction with respect to the video. Because a terminal is normally equipped with a NFC module, the second user terminal can perform video sharing without installing an additional application such as a social application, thereby eliminating the dependence on a social application and improving the flexibility of video sharing. Moreover, video sharing based on the identification of the video enables the first user terminal to open the video based on the identification of the video in a video client instead of in a webpage, thereby improving the playing effect of the shared video.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A video sharing method, comprising:
acquiring (101) an identification of a currently played video, when a sharing instruction is received with respect to the video, the video being played by a video client;
establishing (102) a connection with a first user terminal through a NFC module utilizing a short range wireless communication technology, the first user terminal being within a radio frequency identifiable range of the NFC module and having turned on its own NFC module; and
sharing (103) the video with the first user terminal through the NFC module based on the identification of the video.

2. The method of claim 1, further comprising:
determining whether the NFC module has been turned on and turning on the NFC module if the NFC module has not been turned on, before establishing the connection with the first user terminal through the NFC module utilizing the short range wireless communication technology; and
turning off the NFC module, after sharing the video with the first user terminal.

3. The method of claim 1 or 2, wherein the video client is a livecast client, the video is a livecast video in a livecast room, and the identification of the video is an identification of the livecast room.

4. The method of claim 1, wherein
when the video is a livecast video in a livecast room, the method further comprises: acquiring an identification of an anchor of the livecast room, before sharing the video with the first user terminal through the NFC module based on the identification of the video, and
sharing the video with the first user terminal through the NFC module based on the identification of the video comprises: sharing the video with the first user terminal through the NFC module based on the identification of the video and the identification of the anchor of the livecast room.

5. A video sharing method, comprising:
establishing (201) a connection with a second user terminal through a NFC module, the second user terminal being within a radio frequency identifiable range of the NFC module and having turned on its own NFC module;
receiving (202) a video shared by the second user terminal through the NFC module based on the identification of the video, the identification of the video being acquired by the second user terminal when it receives a sharing instruction with respect to the video currently played, the video being played by the second user terminal through a video client.

6. The method of claim 5, further comprising: after receiving the video shared by the second user terminal through the NFC module based on the identification of the video,
generating, in the video client, an entry for accessing the video, based on the identification of the video;
displaying the entry in a display interface of the video client.

7. The method of claim 6, wherein displaying the entry in the display interface of the video client comprises:
displaying a prompt box in the display interface of the video client, the prompt box including a confirm option and a cancel option, the confirm option being the entry for accessing the video, the cancel option being provided for cancelling display of the prompt box.

8. The method of claim 6, further comprising: after displaying the entry in the display interface of the video client,
playing the video in the video client, when receiving a playing instruction with respect to the entry.

9. A video sharing apparatus, comprising:
a first acquiring module (401) configured to acquire an identification of a currently played video, when a sharing instruction is received with respect to the video, the video being played by a video client;
a connecting module (402) configured to establish a connection with a first user terminal through a NFC module utilizing a short range wireless communication technology, the first user terminal being within a radio frequency identifiable range of the NFC module and having turned on its own NFC module; and
a sharing module (403) configured to share the video with the first user terminal through the NFC module based on the identification of the video.

10. The apparatus of claim 9, further comprising:
a determining module (404) configured to determine whether the NFC module has been turned on;
a turning-on module (405) configured to turn on the NFC module if the NFC module has not been turned on; and
a turning-off module (406) configured to turn off the NFC module.

11. A video sharing apparatus, comprising:
a connecting module (501) configured to establish a connection with a second user terminal through a NFC module, the second user terminal being within a radio frequency identifiable range of the NFC module and having turned on its own NFC module;
a receiving module (502) configured to receive a video shared by the second user terminal through the NFC module based on the identification of the video, the identification of the video being acquired by the second user terminal when it receives a sharing instruction with respect to the video currently played, the video being played by the second user terminal through a video client.

12. A video sharing apparatus, comprising:
a processor (620); and
a memory (604) storing instructions executable by the processor (620),
wherein the processor (620) is configured to perform the video sharing method according to any of claims 1 to 4.

13. A video sharing apparatus, comprising:
a processor (720); and
a memory (704) storing instructions executable by the processor (720),
wherein the processor (720) is configured to perform the video sharing method according to any of claims 5 to 8.

14. A computer program including instructions for executing the steps of a video sharing method according to any of claims 1 to 8 when said program is executed by a computer.

15. A recording medium readable by a computer and having recorded thereon a computer program including instructions for executing the steps of a video sharing method according to any of claims 1 to 8.
